Europäisches Patentamt

European Patent Office

Office européen des brevets

(19)

(11) Veröffentlichungsnummer: **0 242 498**

**A1**

(12) **EUROPÄISCHE PATENTANMELDUNG**

(21) Anmeldenummer: **86890114.1**

(22) Anmeldetag: **25.04.86**

(51) Int. Cl.⁴: **A01G 9/10**

(43) Veröffentlichungstag der Anmeldung:
**28.10.87 Patentblatt 87/44**

(84) Benannte Vertragsstaaten:
**AT BE CH DE FR GB IT LI LU NL SE**

(71) Anmelder: **Petrovic, Branislav**
**Branimira Cirica St.No.C/16**
**18300 Pirot(YU)**

(72) Erfinder: **Petrovic, Branislav**
**Branimira Cirica St.No.C/16**
**18300 Pirot(YU)**

(74) Vertreter: **Hamburger, Walter A., Dipl.-Ing.**
**Patentanwaltskanzlei HAMBURGER Postfach**
**96 Mahlerstrasse 9**
**A-1015 Wien(AT)**

(54) **Zellensystem zum Ziehen von Stecklingen von Waldpflanzen.**

㊗ Die Zelle zum Ziehen von Stecklingen von Waldpflanzen besteht aus einer Grundzelle (1), die kegelförmig ausgebildet ist und eine weite obere Öffnung und engere untere Öffnung aufweist. Im unteren Teil der Grundzelle ist ein rohrförmiges Teil (3,4) untergebracht, das umgekehrt kegelförmig ausgebildet und mit zwei gegenüberliegenden Haltern (5) an den Zellenwänden befestigt ist. Das eingesetzte rohrförmige Teil (3,4) ist im unteren Teil verbreitert, so daß die Torffüllung in der Zelle zurückgehalten wird. Die Zelle besitzt keinen Boden, das rohrförmige Teil (3,4) ist in den Boden eingesetzt. Das Wurzelsystem wächst frei durch den unteren Teil der Zelle hindurch. Die Grundzelle (1) hat vier gegenüberliegende als Richtungsweiser dienende Rippen (2), die vom oberen Ende bis zum Boden der Zelle reichen und deren Aufgabe es ist, das Wurzelsystem nach unten zu führen.

Fig. 1

## Zellensystem zum Ziehen von Stecklingen von Waldpflanzen

Die Erfindung bezieht sich auf das Ziehen von Stecklingen von Waldpflanzen, wobei das Wurzelsystem in Zellen von Hartplastik geschützt ist.

Die Stecklinge werden auf verschiedene Arten gezogen, wie z.B. aus der nackten Wurzel wenn der Samen direkt in die Erde gesät wird und sich die Pflanze aus dem Samen entwickelt. Man kann sie auch in Zellen-Blumentöpfen mit Torferde ziehen. Der gesäte Samen entwickelt sich in die Zelle und die daraus wachsende Pflanze wird zusammen mit dem Rasenstück-Tampon verpflanzt. Es sind verschiedene Methoden zum Ziehen der Stecklinge bekannt.

Durch vorliegende Erfindung wird das Problem der Verwindung bzw. des Verwachsens des Wurzelsystems gelöst. Bei allen bis jetzt bekannten Lösungen zum Ziehen der Stecklinge in Zellen fand eine Verwindung des Wurzelsystems statt; dieses wuchs nach oben zurück, so daß es zur Bildung von Knäueln aus den verflechteten Wurzelfasern sowohl bei den einjährigen als auch bei den zweijährigen Stecklingen kam.

Die in der Pirosad-Zelle erzeugten Stecklinge haben folgende Beschaffenheit: Sie behalten die senkrechte Orientierung der Hauptwurzel beim Austritt aus der Zelle auf dem Boden bei, wobei die Fähigkeit, daß die Hauptwurzel zusammen mit der ersten und zweiten Reihe der Seitenwurzeln ungehindert die Entwicklung nach unten in dem Moment, wenn sie in den Boden ausgesetzt wird, fortsetzen kann. Es kommt zur Knäuelbildung von Wurzelfasern durch Verflechtung. Im Laufe des Wachstums in der Zelle sind die Wurzelfasern regelmäßig verteilt und wachsen parallel zum Boden der Zelle hin. Auf diese Weise verteilte Wurzelfasern wachsen weder nach dem Pflanzen zusammen noch ineinander und es wird somit ein Ersticken der Pflanze und eine Unterbrechung des Transportes der Photosyntheseprodukte verhindert.

Das Wurzelsystem nimmt in einer so ausgebildeten Zelle in der Erde eine annähernd natürliche Gestalt an, so als ob der Steckling direkt in der Erde gezogen worden wäre.

Durch dieses System wird eine weitgehende Annäherung des Wurzelsystems an die natürliche Gestalt erreicht, ohne Rücksicht darauf, daß die Wurzel der Stecklinge durch die festen Zellenwände gehemmt ist.

Zum Ziehen der Stecklinge in Zellen aus verschiedenartigem Material und verschiedener Gestalt sind folgende Systeme bekannt: Paperpot, Kopperfors, Plantahrah, Gora, Ensopot, Jiffypot, Jukosad und Makosad.

Bei allen diesen Systemen hat sich gezeigt, daß es zur mehr oder weniger starken Verwindungen oder Verwachsungen des Wurzelsystems kommt. So gezogene und gesetzte Pflanzen sind unstabil, weil deren Wurzelfasern in einem unentwirrbaren Knäuel eingedreht sind. Daher kommt es zu einem Ersticken und Ineinanderwachsen der Wurzel. Diese Verwindung scheint bei allen diesen Systemen offenbar deshalb aufzutreten, weil entweder die Zellenwände glatt und ohne Rippen sind oder weil sich im unteren Zellenteil eine schmale Öffnung befindet.

Zum Unterschied von diesen Systemen werden mit der erfindungsgemäßen Zelle die vorgenannten Mängel beseitigt.

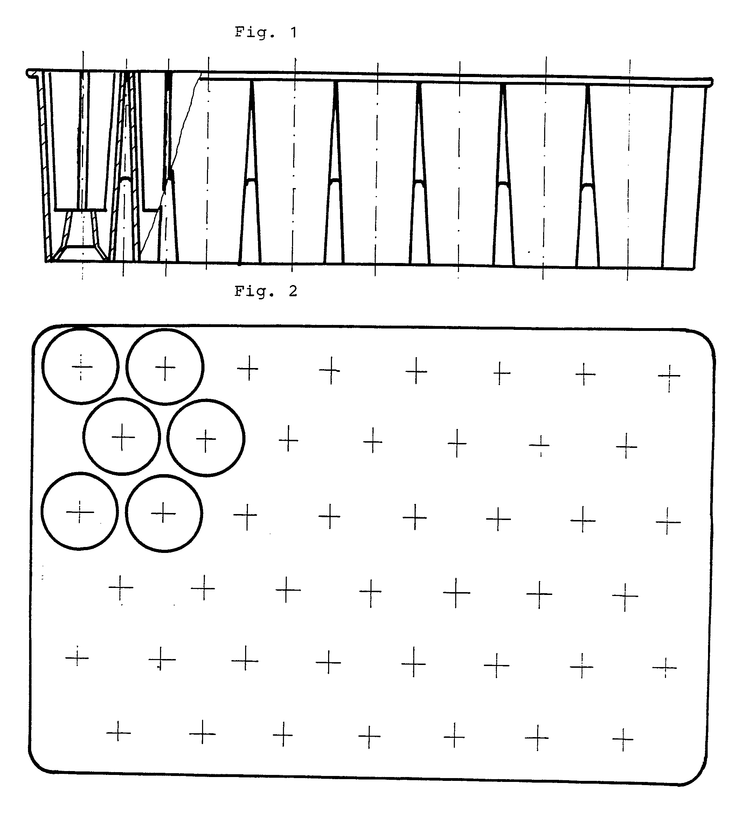

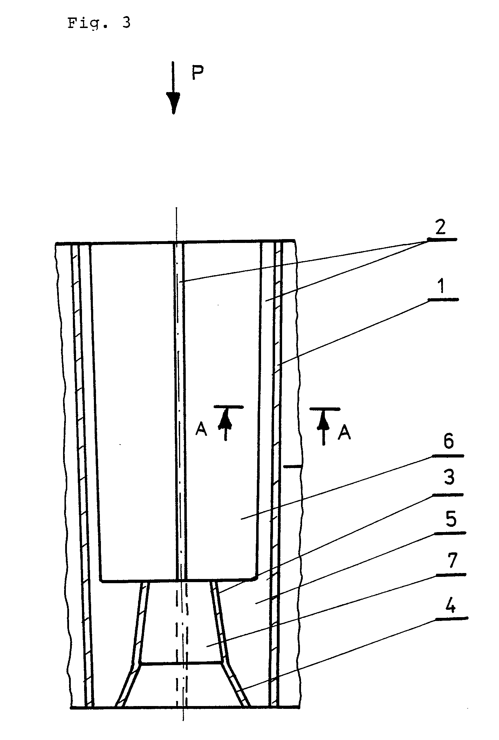

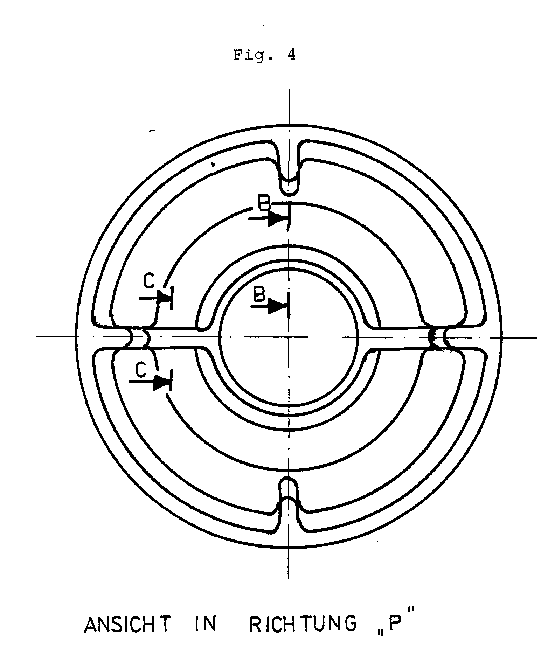

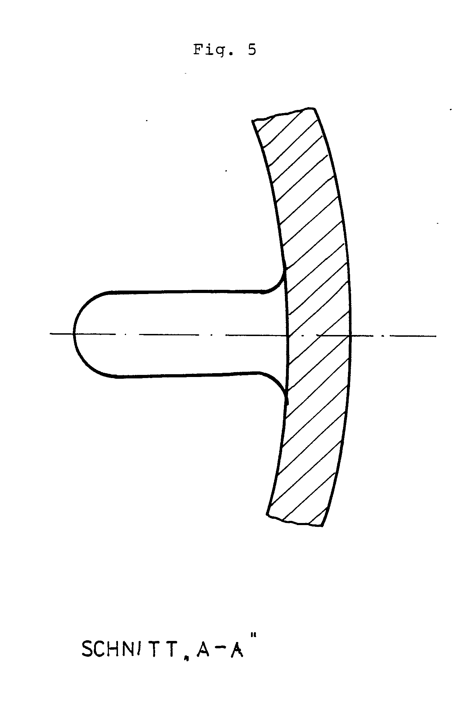

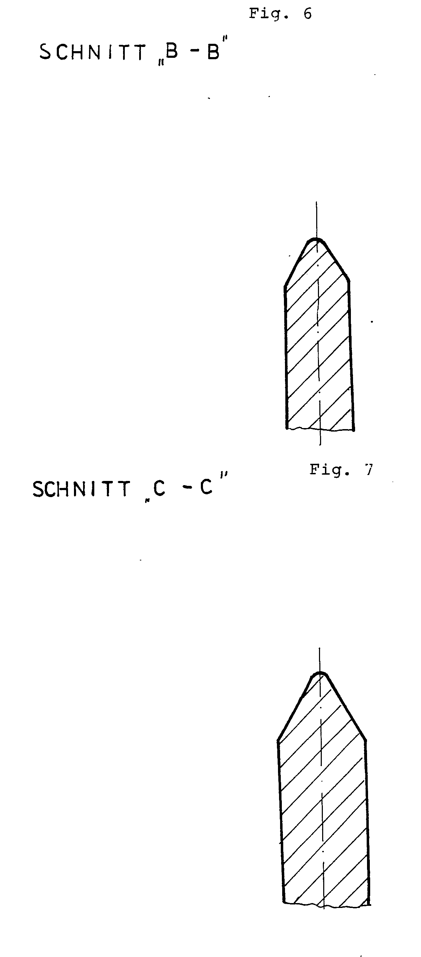

Erfindungsgemäß werden ein Verwinden der Wurzel und eine Knäuelbildung von sich verflechtenden Wurzelfasern dadurch verhindert, daß in der Zelle vier gegenüberliegende Rippen 2 vorgesehen sind (Fig. 2), die vom oberen Ende der Zelle bis zum Boden reichen und als Richtungsweiser für die Wurzelfasern der ersten und zweiten Reihe dienen und daß die Zelle im unteren Teil einen eingesetzten, kegelförmigen, an beiden Seiten offenen Zylinder 3 aufweist, der mit Haltern 5 an den Zellenwänden befestigt ist und bewirkt, daß sich die Wurzelfasern ausbreiten und frei nach unten wachsen können, weil die Zelle an der unteren Seite ganz geöffnet ist und keinen Boden hat. Das sind zwei Grundursachen, warum sich das Wurzelsystem nicht verwinden kann und kein Knäuel von sich verflechtenden Wurzelfasern gebildet werden, wobei das Wurzelsystem, wenn die Pflanze in den Boden gesetzt wird, in der ursprünglichen Lage verbleibt.

Das eingesetzte kegelförmige Zylinderrohr gibt die besten Ergebnisse, wenn seine Länge ein Viertel der Länge der Zelle, in der die Stecklinge wachsen, beträgt, obwohl diese Maßgabe nicht zwingend ist. Am wichtigsten ist es, daß durch den Zylinder das Wurzelsystem ausgebreitet und es durch seine Konstruktion ermöglicht wird, daß die Zelle im unteren Teil ganz geöffnet ist, was von besonderer Bedeutung für das freie Weiterwachsen der Wurzel außerhalb der Zelle ist.

Die Erfindung wird unter Hinweise auf beiliegende Zeichnungen näher erläutert.

Die gezeigte Kassette besteht aus Zellen in denen die Stecklinge von Nadel-und Laubbäumen aller Art gezogen werden können. In Fig. 2 ist mit 1 die Grundzelle, in der die Stecklinge wachsen, bezeichnet. Die Zelle ist kegelförmig mit einer breiten oberen Öffnung und engeren unteren Öffnung ausgebildet. In der unteren Öffnung ist ein zylinderförmiges Rohr 3 untergebracht, das mit zwei gegenüberliegenden Haltern 5 an den Zellenwänden befestigt und im unteren engeren Teil angeordnet ist. Das eingesetzte Zylinderrohr ist so gestellt, daß der obere Teil enger und der untere Teil 4 breiter ist.

Der untere Teil 4 ist deshalb breiter, damit der Torf zurückgehalten wird und beim Füllen nicht aus der Zelle herausfällt und damit die Pflanzenwurzel zusammen mit dem Torf leicht in Form eines Tampons herausgezogen werden kann. Die Verdrehung oder Verwindung der Seitenwurzeln wird durch vier Rippen 2 verhindert, die in einem Winkel in bezug auf die Zellenwände verlaufen und gegenüberliegend in der Zelle verteilt sind. Die erfindungsgemäße Zelle ist aus Hartplastik einstückig in Form eines Containers hergestellt, wobei die Zellen durch feste Verbindungen miteinander zusammenhängen. Die Anzahl der Zellen im Container kann verschieden sein und hängt von der Größe der Grundzelle und der Möglichkeit der leichteren Handhabung bei der Herstellung und beim Transport der Stecklinge in der Pflanzstätte ab.

**Ansprüche**

Zellensystem zum Ziehen von Stecklingen von Waldpflanzen, dadurch gekennzeichnet, daß die Zelle zylinderförmig ausgebildet und im unteren Teil ganz geöffnet und mit einem eingesetzten Zylinderrohr versehen ist, das sich im unteren Teil verbreitert und in bezug auf die Grundzelle umgekehrt kegelförmig ausgebildet und der mit der Grundzelle mit zwei Haltern verbunden ist, wobei die Grundzelle mit vier innerhalb der Grundzelle gegenüberliegenden Rippen, die sich vom oberen Ende der Zelle bis zum Boden erstrecken, versehen ist.

Fig. 1

Fig. 2

Fig. 3

Fig. 4

ANSICHT IN RICHTUNG „P"

Fig. 5

SCHNITT „A—A"

Fig. 6

SCHNITT „B – B"

Fig. 7

SCHNITT „C – C"

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 515 477 (F. PERALES) <br> * Figur 3; Seite 4, Zeilen 22-35 * | 1 | A 01 G 9/10 |
| | --- | | |
| A | DE-A-2 557 573 (ILLINOIS TOOL WORKS INC.) <br> * Seite 6, Zeile 19 - Seite 7, Zeile 11; Figuren * | 1 | |
| | --- | | |
| A | SOVIET INVENTIONS ILLUSTRATED, Sektion Agrikultur, Woche K30, 7. September 1983, Zusammenfassungsnr. 721652 P13, Derwent Publications Ltd., London, GB; & SU - A - 959 683 (HORTICULTURE ZONAL) 28.09.1982 | 1 | |
| | --- | | **RECHERCHIERTE SACHGEBIETE (Int. Cl.4)** |
| A | US-A-3 028 705 (P.J. HOWARD) <br> * Figuren * | 1 | A 01 G 9/00 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 08-12-1986 | WUNDERLICH J E |